# EUROPEAN PATENT APPLICATION

(11) **EP 4 589 095 A1**
(43) Date of publication of application: **23.07.2025**
(21) Application number: 22964456.2
(22) Date of filing: 04.11.2022
(51) Int. Cl.: E04G 23/08

(54) **METHOD FOR DISMANTLING STRUCTURE**

(71) Applicant: Mitsubishi Heavy Industries, Ltd., Tokyo 100-8332 (JP)
(72) Inventor: KANEMASU, Masayuki, Tokyo 100-8332 (JP); SUZUKI, Akihito, Tokyo 100-8332 (JP); HIRATA, Takehiko, Tokyo 100-8332 (JP); YAMASHITA, Masayuki, Tokyo 100-8332 (JP)
(74) Representative: Studio Torta S.p.A.
(86) International application number: PCT/JP2022/041120
(87) International publication number: WO 2024/095439

(57) **Abstract**

A method for disassembling a structure includes: a step of identifying a portion to be damaged of the structure; a step of covering the portion to be damaged with a polymeric material; and a step of damaging the portion to be damaged covered with the polymeric material.

## Description

### TECHNICAL FIELD

The present disclosure relates to a method for disassembling a structure.

### BACKGROUND ART

Patent Document 1 discloses a disassembling method for disassembling an existing steel tower. The disassembling method includes a step of cutting the upper tower body at the cutting position to separate a unit tower body from the lower part of the upper tower body and a step of carrying the unit tower body out to remove the unit tower body.

### Citation List

### Patent Literature

Patent Document 1: JP2010-1649A

### SUMMARY

### Problems to be Solved

Meanwhile, using the assembling method for assembling an existing steel tower disclosed in Patent Document 1 may lead to scattering of dust such as filings and shards from cutting the upper tower body.

In view of the above, an object of at least one embodiment of the present invention is to provide a method for disassembling a structure capable of suppressing scattering of dust upon disassembling of a structure.

### Solution to the Problems

A method for disassembling a structure according to at least one embodiment of the present invention includes: a step of identifying a portion to be damaged of the structure; a step of covering the portion to be damaged with a polymeric material; and a step of damaging the portion to be damaged covered with the polymeric material.

### Advantageous Effects

According to at least one embodiment of the present invention, the portion to be damaged is covered with a polymeric material, and thus it is possible to suppress scattering of dust generated from the portion.

### BRIEF DESCRIPTION OF DRAWINGS

FIG. 1 is a schematic diagram of a structure.
FIG. 2 is a schematic diagram showing a method for disassembling the structure depicted in FIG. 1.
FIG. 3 is a cross-sectional view of a groove on an outer surface of a portion to be damaged of a structure.
FIG. 4 is a diagram showing a through hole disposed in a hollow portion from outside to inside of a portion to be damaged of a structure.
FIG. 5 is a diagram showing a step of covering a portion to be damaged of a structure with a sheet-shaped polymeric material.
FIG. 6 is a cross-sectional view showing a step of covering an outer surface and an inner surface of a portion to be damaged of a structure with a polymeric material.
FIG. 7 is a cross-sectional view of a step of injecting a polymeric material from outside to inside of a portion to be damaged of a structure.
FIG. 8 is a schematic diagram of a meteorological tower.
FIG. 9 is a schematic diagram showing a method for disassembling the meteorological tower depicted in FIG. 8.
FIG. 10 is a schematic diagram of a wind turbine.
FIG. 11 is a schematic diagram showing a method for disassembling the wind turbine depicted in FIG. 10.
FIG. 12 is a diagram showing a portion to be damaged of a wind turbine blade.
FIG. 13 is a cross-sectional view of a groove on an outer surface of a portion to be damaged of a wind turbine blade.
FIG. 14 is a cross-sectional view showing a through hole disposed in a hollow portion from outside to inside of a portion to be damaged of a wind turbine blade.
FIG. 15 is a diagram showing a step of covering a portion to be damaged of a wind turbine blade with a sheet-shaped polymeric material.
FIG. 16 is a cross-sectional view showing a step of covering an outer surface and an inner surface of a portion to be damaged of a wind turbine blade with a polymeric material.
FIG. 17 is a cross-sectional view of a step of injecting a polymeric material from outside to inside of a portion to be damaged of a wind turbine blade.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

### [Method for Disassembling Structure]

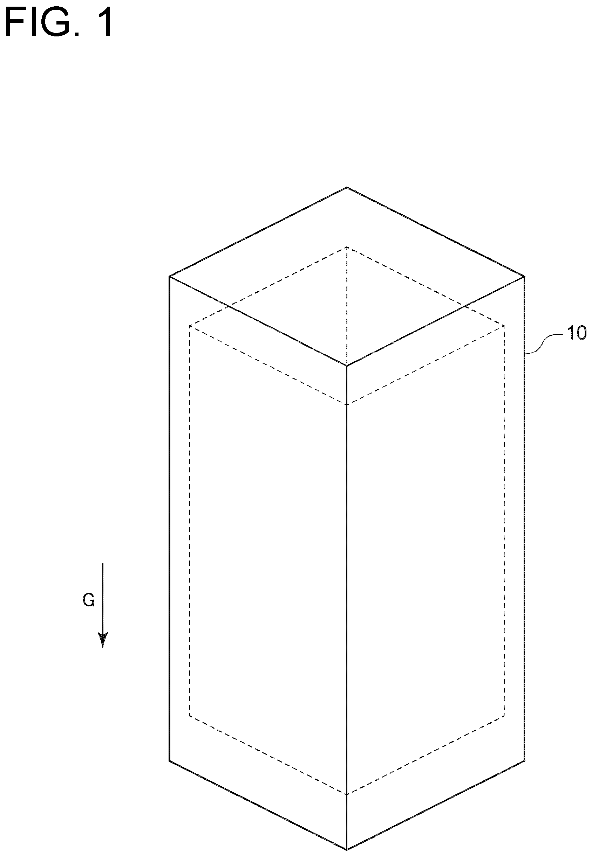

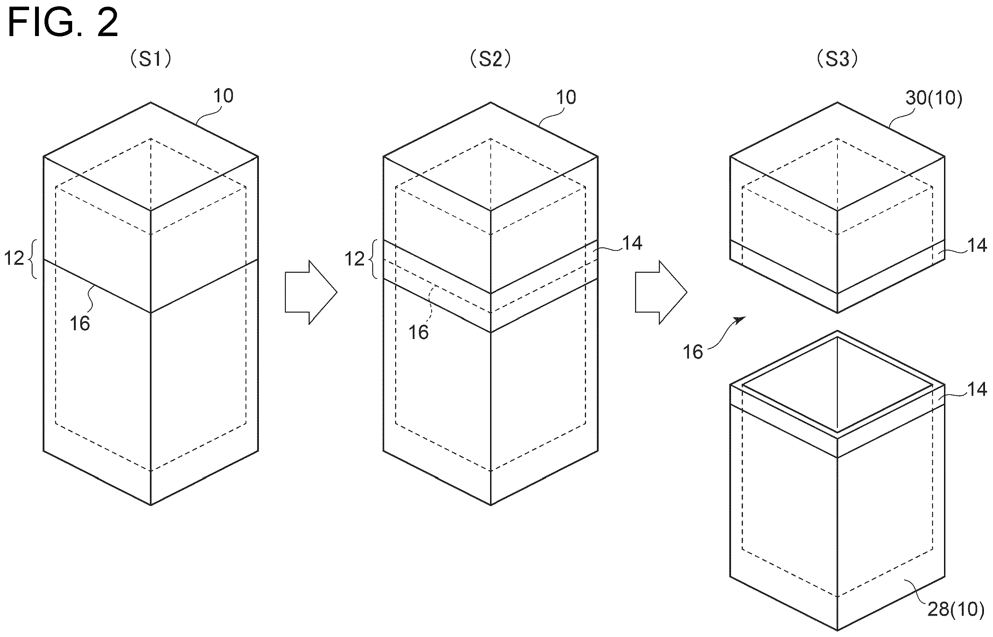

FIG. 1 is a schematic diagram of a structure 10. FIG. 2 is a schematic diagram showing a method for disassembling the structure depicted in FIG. 1.

The structure 10 to which the method for disassembling a structure according to an embodiment is to be applied is not limited in shape, structure, or material. The method for disassembling a structure according to an embodiment is applicable to structures such as meteorological towers, wind turbines, airplanes, ships, pipes, tanks, or automobiles. Hereinafter, a method for disassembling a hollow structure 10 extending in the direction of gravity will be illustrated as depicted in FIG. 1, but the structure is not limited thereto and may be a structure that is not hollow (solid structure).

As depicted in FIG. 2, a method for disassembling a structure 10 includes a step (S1) of identifying a portion to be damaged 12 of the structure 10, a step (S2) of covering the portion to be damaged 12 of the structure 10 with a polymeric material 14, and a step (S3) of damaging the portion to be damaged 12 of the structure 10 covered with the polymeric material 14.

The step (S1) of identifying the portion to be damaged 12 of the structure 10 is a step of identifying a portion 16 at which the structure 10 is cut in two or bent, or a portion that breaks when the structure 10 is cut in two or bent, and may include identifying a portion which is assumed to become damaged when a fallen part of the structure 10 cut in two hits the ground or water surface. Of the portion to be damaged 12 of the structure 10, the portion 16 at which the structure 10 is cut in two or bent is arbitrarily identifiable. The portion that breaks when the structure 10 is cut in two or bent is identified taking into account the breaking strength and the procedure.

The portion to be damaged 12 of the structure 10 is a portion that becomes the boundary when the structure 10 is cut in two or bent, or a portion that breaks when the structure 10 is cut in two or bent, and may include a portion which is assumed to become damaged when a fallen part of the structure 10 cut in two hits the ground or water surface. The portion to be damaged of the structure 10 is, for instance, a portion whose breaking strength is originally small, a connection portion upon construction of the structure 10, or a portion where the breaking strength is reduced by making a scratch in advance.

The portion whose breaking strength is originally small is, for instance, a portion having a smaller thickness than another part (thin portion), identifiable by checking the structure on a drawing or the like, but is not limited thereto and may be detected by ultrasonic wave or the like. Thus, the step (S1) of identifying the portion to be damaged of the structure 10 may include a step of identifying the portion with ultrasonic wave or the like.

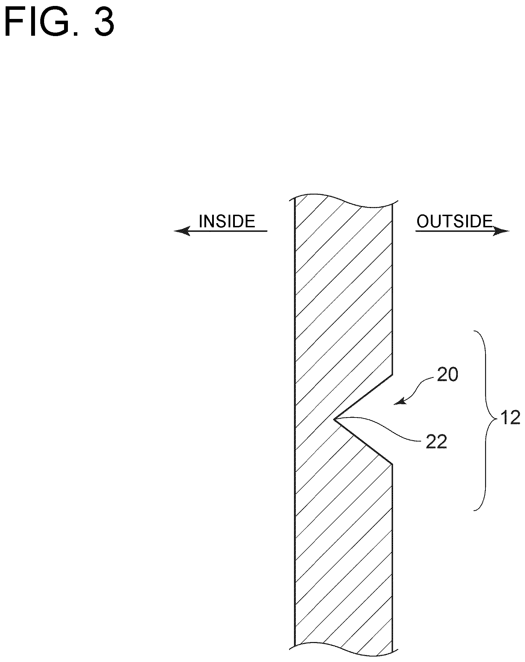

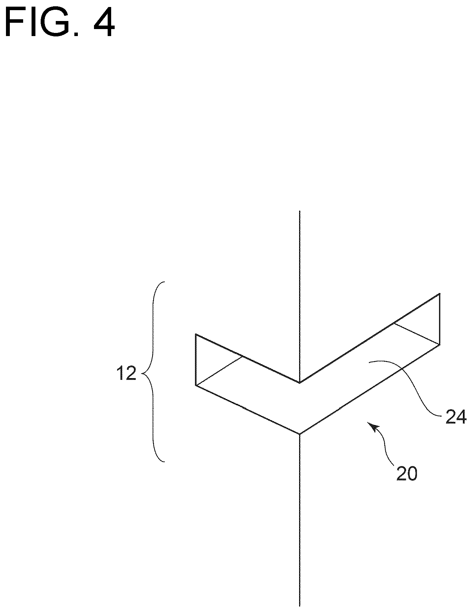

Furthermore, the step (S1) of identifying the portion to be damaged 12 of the structure 10 may include a step of providing a scratch 20 on the portion to be damaged 12 as a starting point, as depicted in FIGs. 3 and 4. The scratch 20 to be provided on the portion to be damaged 12 may be a groove 22 on the outer surface of the structure 10 as depicted in FIG. 3, or a hole 24 penetrating through the hollow section from outside to inside of the structure 10 as depicted in FIG. 4. The groove 22 on the outer surface of the structure 10 is a groove having a V-shaped cross sectional shape for instance, but is not limited thereto, and may be a groove having a U-shaped cross sectional shape. The hole 24 penetrating through the hollow section from outside to inside of the structure 10 is a rectangular slit for instance, but not limited thereto, and may be a cylindrical hole for instance.

As depicted in FIG. 3, the step (S2) of covering the portion to be damaged 12 of the structure 10 with the polymeric material 14 is a step of suppressing scattering of filings and shards generated when the structure 10 is cut in two or bent, or shards generated when a fallen part of the structure 10 cut in two strikes the ground or water surface. The polymeric material 14 allows the structure 10 to catch filings or shards, or suppresses scattering of filings or shards outside the structure 10. The polymeric material 14 that allows the structure 10 to catch filings or shards makes filings or shards adhere to the structure 10, and a polymeric material that has an adhesiveness to make filings or shards adhere, or a polymeric material that has a semi-fluidity to envelop filings or shards is selected. The polymeric material 14 that suppresses scattering of filings or shards outside the structure 10 is a polymeric material that covers the exterior of the structure 10 to suppress scattering of shards of the structure 10 outside the structure 10 when the interior of the structure 10 shatters, and a polymeric material having an extensibility and a flexibility (shock mitigation property) is selected.

The polymeric material 14 is, for instance, thermosetting resin or thermoplastic resin, rubber or elastomer, wax, grease, polypropylene, nylon, ethylene propylene rubber, urethane, or polyurea, but not limited thereto, and may be selected appropriately in accordance with the purpose. For instance, a polymeric material having an adhesiveness that filings or shards adhere is an oleaginous material such as thermoplastic resin, wax, and grease, and a polymeric material having a semi-fluidity that envelops filings or shards is an oleaginous material such as wax and grease. For instance, a polymeric material that covers the exterior of the structure to suppress scattering of shards of the structure outside the structure when the interior of the structure shatters is a polymeric material such as rubber, elastomer, and a sheet-shaped polymeric material, and a polymeric material having an extensibility and a flexibility (shock mitigation property) is polyurea or the like.

The method for covering the portion to be damaged 12 of the structure 10 with the polymeric material 14 may include applying or spraying the polymeric material 14 onto the structure 10, or attaching or wrapping the polymeric material 14 having a sheet shape on the structure 10, but not limited thereto.

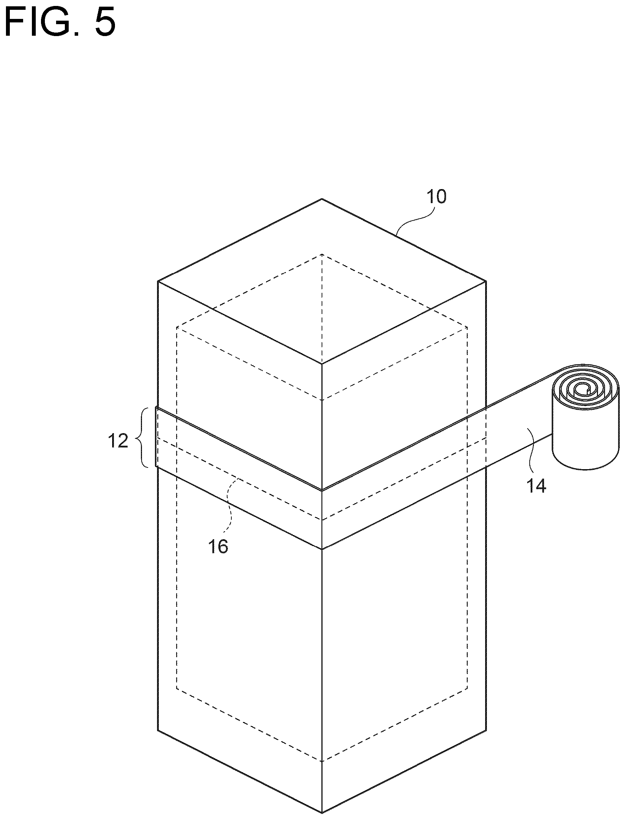

Thus, in a case where the polymeric material 14 is a sheet-shaped polymeric material, the step (S2) of covering the portion to be damaged 12 of the structure 10 with the polymeric material 14 may include a step of covering the portion to be damaged 12 with the polymeric material 14 having a sheet shape, as depicted in FIG. 5.

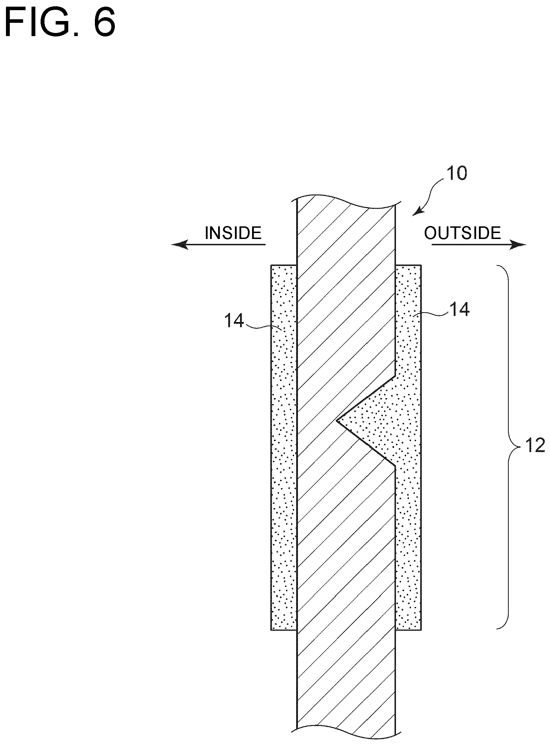

As described above, in a case where the structure 10 is hollow, the step (S2) of covering the portion to be damaged 12 of the structure 10 with the polymeric material 14 may include a step of covering at least one of an outer surface or an inner surface of the portion to be damaged 12 with the polymeric material 14, as depicted in FIG. 6. That is, "at least one of" means that the polymeric material 14 may cover only the outer surface of the portion to be damaged 12 of the structure 10, or only the inner surface of the portion to be damaged 12 of the structure 10. Alternatively, the polymeric material 14 may cover both the outer surface and the inner surface of the portion to be damaged 12.

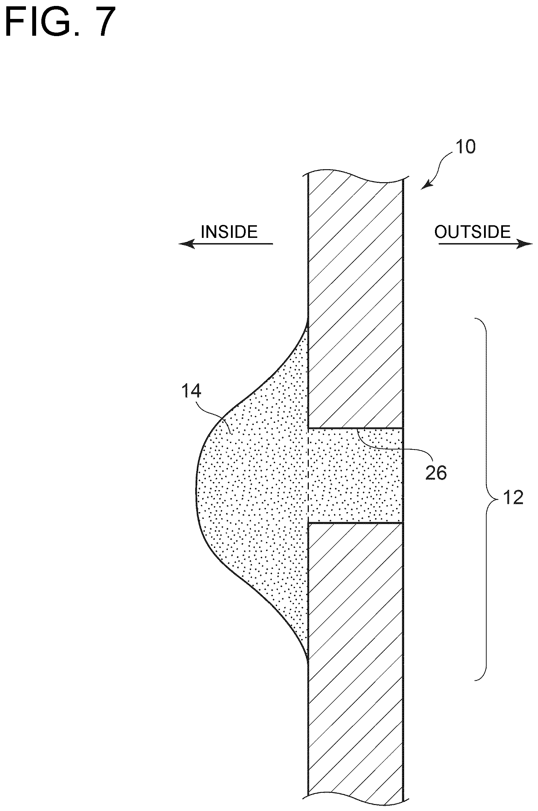

Furthermore, in a case where the structure 10 is hollow, the step (S2) of covering the portion to be damaged 12 of the structure 10 with the polymeric material 14 may include a step of injecting the polymeric material 14 from outside to inside the portion to be damaged 12, as depicted in FIG. 7. For instance, a hole 26 for injecting the polymeric material 14 from outside to inside of the portion to be damaged of the structure 10 may be an existing hole, or a hole provided to inject the polymeric material. Furthermore, the polymeric material 14 to be injected from outside to inside of the portion to be damaged 12 of the structure 10 is, for instance, an oleaginous substance such as wax and grease.

As depicted in FIG. 3, the step (S3) of damaging the portion to be damaged 12 of the structure 10 covered with the polymeric material 14 is a step of cutting the structure 10 in two or bending the structure 10 at the portion to be damaged 12 of the structure 10 covered with the polymeric material 14. In the step (S3) of damaging the portion to be damaged 12 of the structure 10 covered with the polymeric material 14, the structure 10 may be completely cut in two, or bent at a notch provided on a portion covered with the polymeric material 14.

The step (S3) of damaging the portion to be damaged 12 of the structure 10 covered with the polymeric material 14 may include a step of separating a first side of the portion to be damaged 12 from a second side opposite to the first side across the portion to be damaged 12. The step of separating a first side of the portion to be damaged 12 from a second side opposite to the first side across the portion to be damaged 12 may include cutting a gravity-direction lower side 28 off from a gravity-direction upper side 30 and letting the gravity-direction lower side fall in a case where the structure 10 extends in the direction of gravity.

The method for disassembling the structure 10 according to an embodiment includes a step (S2) of covering the portion to be damaged 12 of the structure 10 with the polymeric material 14, and thus the portion to be damaged 12 of the structure 10 is covered with the polymeric material 14, and it is possible to suppress scattering of dust generated at the portion 12.

In a case where the step (S1) of identifying the portion to be damaged 12 of the structure 10 includes a step of providing a scratch 20 on the portion to be damaged 12 as a starting point, the portion to be damaged 12 of the structure 10 has the scratch 20 as a starting point, and thus it is possible to damage the structure 10 using the scratch 20 as a starting point.

In a case where the polymeric material 14 is a sheet-shaped polymeric material and the step (S2) of covering the portion to be damaged 12 of the structure 10 with the polymeric material 14 includes a step of covering the portion to be damaged 12 with the sheet-shaped polymeric material, the portion to be damaged 12 is covered with the polymeric material 14 having a sheet shape, and thus it is possible to suppress scattering of dust generated at the portion to be damaged 12.

In a case where the structure 10 is hollow and the step (S3) of covering the portion to be damaged 12 of the structure 10 with the polymeric material 14 includes a step of covering at least one of the outer surface or the inner surface of the portion to be damaged 12 with the polymeric material, at least one of the outer surface or the inner surface of the portion to be damaged 12 is covered with the polymeric material 14, and thus it is possible to suppress scattering of dust generated at the portion to be damaged 12.

In a case where the structure 10 is hollow and the step (S3) of covering the portion to be damaged 12 of the structure 10 with the polymeric material 14 includes a step of injecting the polymeric material 14 from outside to inside the portion to be damaged 12, the polymeric material 14 is injected from outside to inside of the portion to be damaged 12 and the interior of the portion to be damaged 12 is covered with the polymeric material 14, and thus it is possible to suppress scattering of dust generated at the portion to be damaged 12.

In a case where the step (S3) of damaging the portion to be damaged 12 of the structure 10 covered with the polymeric material 14 includes a step of separating a first side of the portion to be damaged 12 from a second side opposite to the first side across the portion to be damaged 12, the first side is separated from the second side opposite to the first side across the portion to be damaged, and thereby the structure 10 is disassembled.

### [Method for disassembling a meteorological tower]

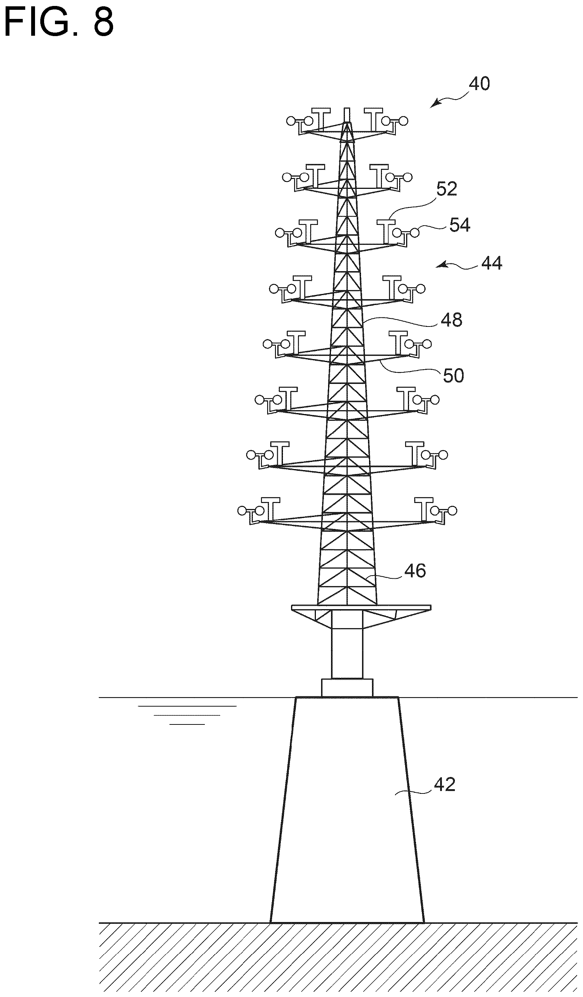

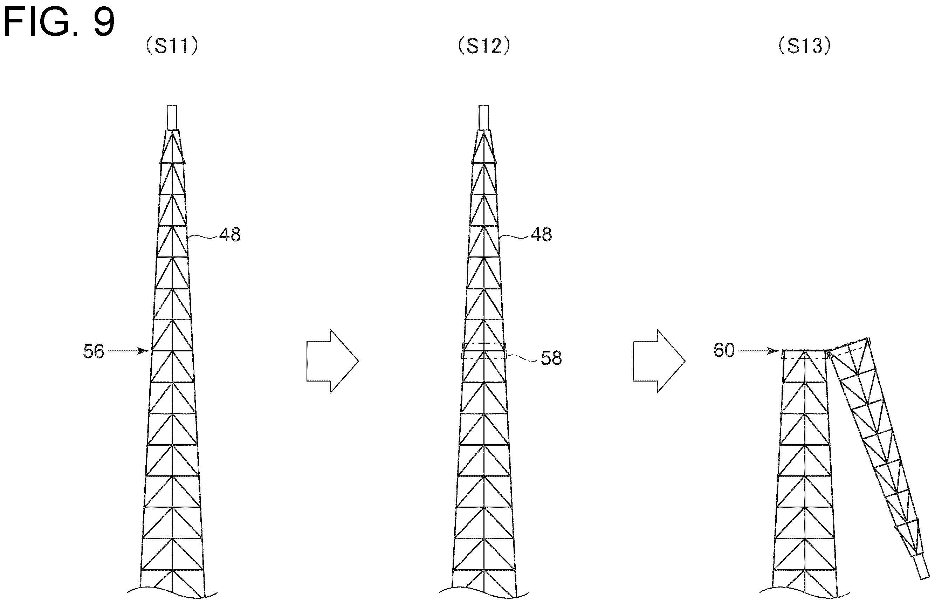

FIG. 8 is a schematic diagram of a meteorological tower 40. FIG. 9 is a schematic diagram showing a method for disassembling the meteorological tower 40 depicted in FIG. 8.

As depicted in FIG. 8, the meteorological tower 40 includes a foundation 42 and a tower 44 built on the foundation 42. The tower 44 is a structure made by assembling and welding steel frames 46. Measurement instruments 52, 42 for measuring parameters related to weather (e.g., wind direction, wind velocity, temperature, atmospheric pressure, or precipitation) are disposed on each of branch-shaped protrusions 50 extending in a branched fashion from a tower body 48.

A method for disassembling the meteorological tower 40 depicted in FIG. 9 is a method for disassembling the tower body 48. The branch-shaped protrusions 50 and the measurement instruments 52, 54 disposed on each of the branch-shaped protrusions 50 are dismantled before disassembling of the tower body 48. As depicted in FIG. 9, a method for disassembling the meteorological tower 40 includes a step (S11) of identifying a portion to be damaged 56 of the tower body 48, a step (S12) of covering the portion to be damaged 56 of the tower body 48 with a polymeric material 58, and a step (S13) of damaging the portion to be damaged 56 of the tower body 48 covered with the polymeric material 58.

The step (S11) of identifying the portion to be damaged 56 of the tower body 48 is a step of identifying a portion at which the tower body 48 is cut in two or bent, or a portion that breaks when the tower body 48 is cut in two or bent, and may include identifying a portion which is assumed to become damaged when a fallen part of the tower body 48 cut in two strikes the ground or water surface. Of the portion to be damaged of the tower body 48, the portion 60 at which the tower body 48 is cut in two or bent is arbitrarily identifiable. The portion that breaks when the tower body 48 is cut in two or bent is identified taking into account the breaking strength and the procedure.

The portion to be damaged 56 of the tower body 48 is a portion that becomes the boundary when the tower body 48 is cut in two or bent, or a portion that breaks when the tower body 48 is cut in two or bent, and may include a portion which is assumed to become damaged when a fallen part of the tower body 48 cut in two strikes the ground or water surface. The portion to be damaged 56 of the tower body 48 is, for instance, a portion whose breaking strength is originally small, a connection portion upon construction of the tower body 48, or a portion where the breaking strength is reduced by making a scratch in advance.

The portion whose strength is originally small is, for instance, a portion having a smaller thickness than another part (thin portion), identifiable by checking the structure on a drawing, but is not limited thereto and may be detected by ultrasonic wave or the like. Thus, the step of identifying the portion to be damaged of the tower body 48 may include a step of identifying the portion with ultrasonic wave or the like.

Furthermore, the step (S11) of identifying the portion to be damaged 56 of the tower body 48 may include a step of providing a scratch on the portion to be damaged 56 as a starting point. The scratch to be provided on the portion to be damaged may be a groove disposed on the steel frame 46 constituting the tower body 48, or a slit or a hole disposed on the steel frame 46 constituting the tower body 48. The groove on the steel frame 46 is a groove having a V-shaped cross sectional shape, but not limited thereto, and may be a groove having a U-shape.

The step (S12) of covering the portion to be damaged 56 of the tower body 48 with the polymeric material 58 is a step of suppressing scattering of filings and shards generated when the structure 10 is cut in two or bent, or shards generated when a fallen part of the tower body 48 cut in two strikes the ground or water surface. The polymeric material 58 allows the tower body 48 to catch filings or shards, or suppresses scattering of filings or shards outside the tower body 48. The polymeric material that allows the tower body 48 to catch filings or shards makes filings or shards adhere to the tower body 48, and a polymeric material that has an adhesiveness to make filings or shards adhere or a polymeric material that has a semi-fluidity to envelop filings or shards is selected. The polymeric material that suppresses scattering of filings or shards outside the tower body 48 is a polymeric material that suppresses scattering of filings or shards of the steel frame 46 constituting the tower body 48 outside the tower body 48, and a polymeric material having an extensibility and a flexibility (shock mitigation property) is selected.

The polymeric material 58 is, for instance, thermosetting resin or thermoplastic resin, rubber or elastomer, wax, grease, polypropylene, nylon, ethylene propylene rubber, urethane, or polyurea, but not limited thereto, and may be selected appropriately in accordance with the purpose. For instance, a polymeric material having an adhesiveness that filings or shards adhere is an oleaginous material such as thermoplastic resin, wax, and grease, and a polymeric material having a semi-fluidity that envelops filings or shards is an oleaginous material such as wax and grease. For instance, a polymeric material that suppresses scattering of fillings and shards of the steel frame 46 constituting the tower body 48 outside the tower body 48 is a polymeric material such as rubber, elastomer, and a sheet-shaped polymeric material, and a polymeric material having an extensibility and a flexibility (shock mitigation property) is polyurea or the like.

The step (S12) of covering the portion to be damaged 56 of the tower body 48 with the polymeric material 58 includes applying or spraying the polymeric material 58 onto the tower body 48, or attaching or wrapping a sheet-shaped polymeric material on the tower body 48, but not limited thereto.

Thus, in a case where the polymeric material 58 is a sheet-shaped polymeric material, the step (S12) of covering the portion to be damaged 56 of the tower body 48 with the polymeric material 58 may include a step of covering the portion to be damaged 56 with the polymeric material having a sheet shape, as depicted in FIG. 5.

The step (S13) of damaging the portion to be damaged 56 of the tower body 48 covered with the polymeric material 58 is a step of cutting the tower body 48 in two or bending the tower body 48 at the portion to be damaged 56 covered with the polymeric material 58. In the step of damaging the portion to be damaged 56 covered with the polymeric material 58, the tower body 48 may be completely cut in two, or bent at a notch provided on a portion covered with the polymeric material 58.

The step (S13) of damaging the portion to be damaged 56 of the tower body 48 covered with the polymeric material 58 may include a step of separating a first side of the portion to be damaged 56 from a second side opposite to the first side across the portion to be damaged 56. The step of separating a first side of the portion to be damaged 56 from a second side opposite to the first side across the portion to be damaged 56 may include cutting a gravity-direction upper side off from a gravity-direction lower side and hanging the gravity-direction upper side.

The method for disassembling the meteorological tower 40 includes a step (S12) of covering the portion to be damaged 56 of the tower body 48 with the polymeric material 58, and thus the portion to be damaged 56 of the tower body 48 is covered with the polymeric material 58, and it is possible to suppress scattering of dust such as filings generated at the portion 56.

In a case where the step (S11) of identifying the portion to be damaged 56 of the tower body 48 includes a step of providing a scratch on the portion to be damaged 56 as a starting point, the portion to be damaged of the tower body 48 has the scratch as a starting point, and thus it is possible to damage the tower body 48 using the scratch as a starting point.

In a case where the polymeric material 14 is a sheet-shaped polymeric material and the step (S12) of covering the portion to be damaged 56 of the tower body 48 with the polymeric material includes a step of covering the portion to be damaged 56 with the sheet-shaped polymeric material, the portion to be damaged 56 is covered with the polymeric material having a sheet shape, and thus it is possible to suppress scattering of dust such as filings generated at the portion to be damaged 56.

In a case where the step (S13) of damaging the portion to be damaged 56 covered with the polymeric material 58 includes a step of separating a first side of the portion to be damaged 56 from a second side opposite to the first side across the portion to be damaged 56, the first side is separated from the second side opposite to the first side across the portion to be damaged 56, and thereby the tower body 48 is disassembled.

### [Method for disassembling a wind turbine]

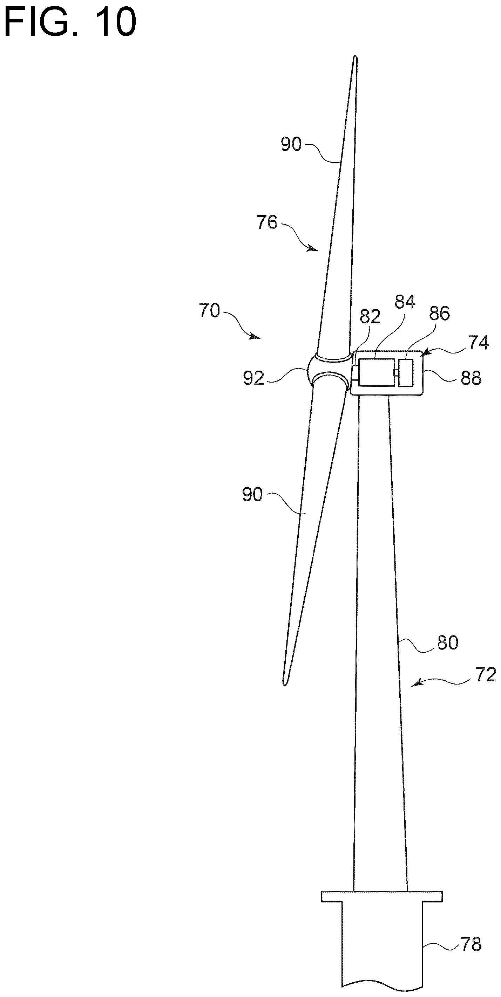

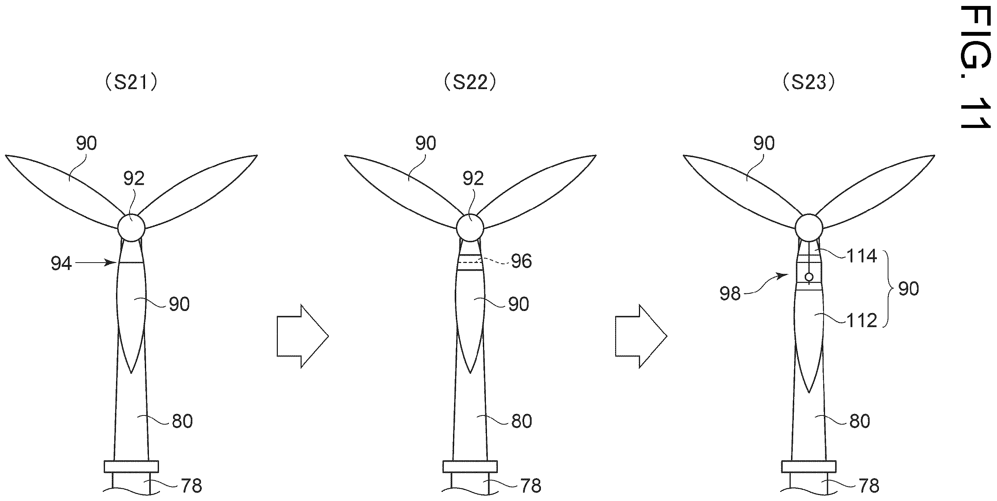

FIG. 10 is a schematic diagram of a wind turbine 70. FIG. 11 is a schematic diagram showing a method for disassembling the wind turbine 70 depicted in FIG. 10.

As depicted in FIG. 10, the wind turbine 70 includes a support-structure part 72, a generator part 74, and a rotor part 76. The support-structure part 72 includes a foundation 78, a tower 80, a yaw control apparatus (not depicted), for instance. The generator part 74 includes a driving shaft 82, a gearbox 84, a generator 86, a controller (not depicted), for instance, and is housed in a housing 88 called a nacelle. The rotor part 76 includes a wind turbine blade90, a rotor head 92, and the like.

A method for disassembling a wind turbine 70 depicted in FIG.1 is a method for disassembling a wind turbine blade 90, and the yaw control device and the controller are dismantled before disassembling the wind turbine blade 90. As depicted in FIG. 11, the method for disassembling a wind turbine 70 includes disassembling a plurality of (three) wind turbine blades 90 in sequence, and the wind turbine blade 90 to be disassembled is rotated and fixed along the direction of gravity.

The method for disassembling a wind turbine 70 includes a step (S21) of identifying a portion to be damaged 94 of the wind turbine blade 90, a step (S22) of covering the portion to be damaged 94 of the wind turbine blade 90 with a polymeric material 96, and a step (S23) of damaging the portion to be damaged 94 of the wind turbine blade 90 covered with the polymeric material 96.

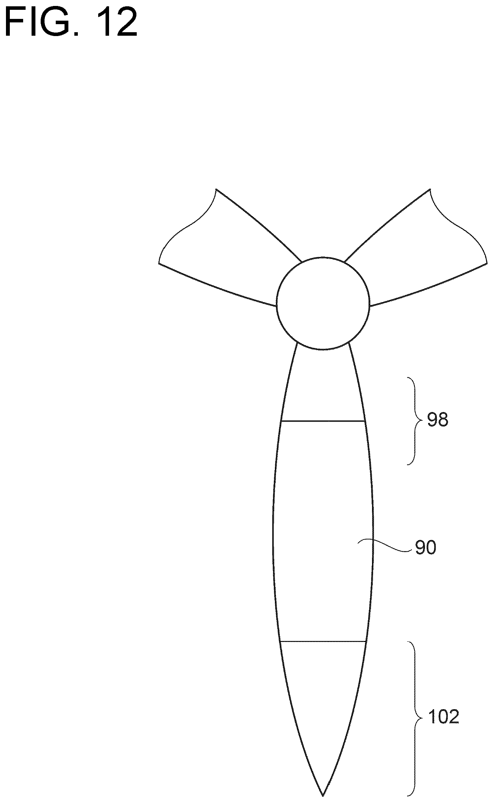

The step (S21) of identifying the portion to be damaged 94 of the wind turbine blade 90 is a step of identifying a portion 98 at which the wind turbine blade 90 is cut in two or bent, or a portion that breaks when the wind turbine blade 90 is cut in two or bent, and may include identifying a portion which is assumed to become damaged when a fallen part of the wind turbine blade 90 cut in two strikes the ground or water surface. As depicted in FIG. 12, of the portion to be damaged of the wind turbine blade 90, the portion 98 at which the wind turbine blade 90 is cut in two or bent is arbitrarily identifiable. The portion 102 that breaks when the wind turbine blade 90 is cut in two or bent is identified taking into account the breaking strength and the procedure. For instance, the portion 102 that breaks when the wind turbine blade 90 is cut in two or bent is a portion that breaks when the portion falls on the ground, such as a tip end portion of the wind turbine blade 90.

The portion to be damaged 94 of the wind turbine blade 90 is a portion that becomes the boundary when the wind turbine blade 90 is cut in two or bent, or a portion that breaks when the wind turbine blade 90 is cut in two or bent, and may include a portion which is assumed to become damaged when a fallen part of the wind turbine blade 90 cut in two strikes the ground or water surface. The portion to be damaged of the wind turbine blade 90 is, for instance, a portion whose breaking strength is originally small, a connection portion upon assembling of the wind turbine blade, or a portion where the breaking strength is reduced by making a scratch in advance.

The portion whose breaking strength is originally small is, for instance, a portion having a smaller thickness than another part (thin portion), identifiable by checking the structure on a drawing, but is not limited thereto and may be detected by ultrasonic wave or the like. Thus, the step (S21) of identifying the portion to be damaged of the wind turbine blade 90 may include a step of identifying the portion with ultrasonic wave or the like.

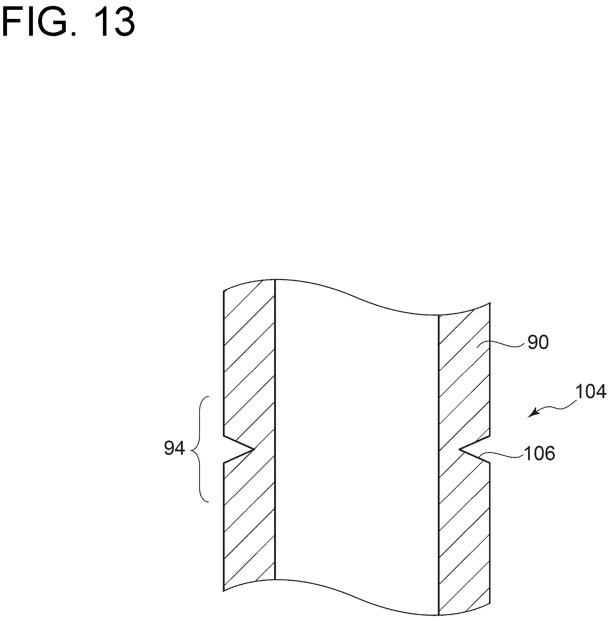

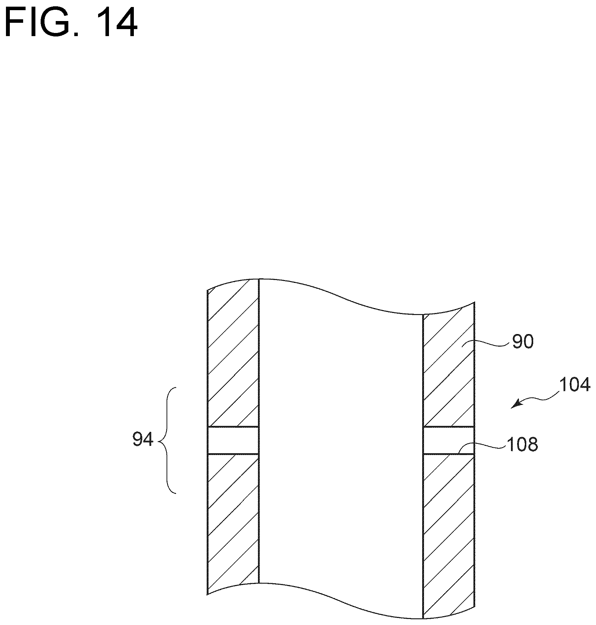

Furthermore, the step (S21) of identifying the portion to be damaged 94 of the wind turbine blade 90 may include a step of providing a scratch 104 on the portion to be damaged 94 as a starting point, as depicted in FIGs. 13 and 14. The scratch 104 to be provided on the portion to be damaged may be a groove 106 on the outer surface of the wind turbine blade 90 as depicted in FIG. 13, or a hole 108 penetrating through the hollow section from outside to inside of the wind turbine blade 90 as depicted in FIG. 14. The groove 106 on the outer surface of the wind turbine blade 90 is a groove having a V-shaped cross sectional shape, but is not limited thereto, and may be a groove having a U-shaped cross sectional shape. The hole 108 penetrating through the hollow section from outside to inside of the wind turbine blade 90 is a rectangular slit for instance, but not limited thereto, and may be a cylindrical hole for instance.

The step (S22) of covering the portion to be damaged 94 of the wind turbine blade 90 with the polymeric material 96 is a step of suppressing scattering of filings and shards generated when the wind turbine blade 90 is cut in two or bent, or shards generated when a fallen part of the wind turbine blade 90 cut in two strikes the ground or water surface. The polymeric material 96 allows the wind turbine blade 90 to catch filings or shards, or suppresses scattering of filings or shards outside the wind turbine blade 90. The polymeric material 96 that allows the wind turbine blade 90 to catch filings or shards makes filings or shards adhere to the wind turbine blade 90, and a polymeric material that has an adhesiveness to make filings or shards adhere, or a polymeric material that has a semi-fluidity to envelop filings or shards is selected. The polymeric material that suppress scattering of filings or shards outside the wind turbine blade 90 is a polymeric material that covers the exterior of the wind turbine blade 90 to suppress scattering of shards of the wind turbine blade 90 outside the wind turbine blade 90 when the interior of the wind turbine blade 90 shatters, and a polymeric material having an extensibility and a flexibility (shock mitigation property) is selected.

The polymeric material 96 is, for instance, thermosetting resin or thermoplastic resin, rubber or elastomer, wax, grease, polypropylene, nylon, ethylene propylene rubber, urethane, or polyurea, but not limited thereto, and may be selected appropriately in accordance with the purpose. For instance, a polymeric material having an adhesiveness that filings or shards adhere is an oleaginous material such as thermoplastic resin, wax, and grease, and a polymeric material having a semi-fluidity that envelops filings or shards is an oleaginous material such as wax and grease. For instance, a polymeric material that covers the exterior of the wind turbine blade 90 to suppress scattering of shards of the wind turbine blade 90 outside the wind turbine blade 90 when the interior of the wind turbine blade 90 shatters is a polymeric material such as rubber, elastomer, and a sheet-shaped polymeric material, and a polymeric material having an extensibility and a flexibility (shock mitigation property) is polyurea or the like.

Covering the portion to be damaged 94 of the wind turbine blade 90 with the polymeric material 96 includes applying or spraying the polymeric material 96 onto the wind turbine blade 90, or attaching or wrapping the polymeric material 96 having a sheet shape on the wind turbine blade 90, but not limited thereto.

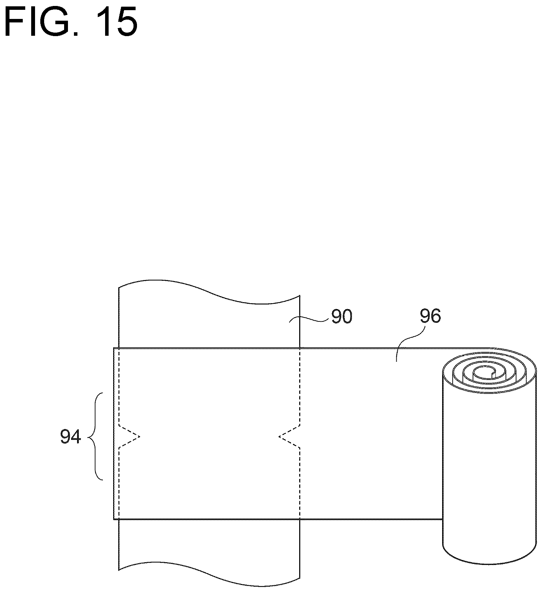

Thus, in a case where the polymeric material 96 is a sheet-shaped polymeric material, the step (S22) of covering the portion to be damaged 94 of the wind turbine blade 90 with the polymeric material 96 may include a step of covering the portion to be damaged 94 with the polymeric material having a sheet shape, as depicted in FIG. 15.

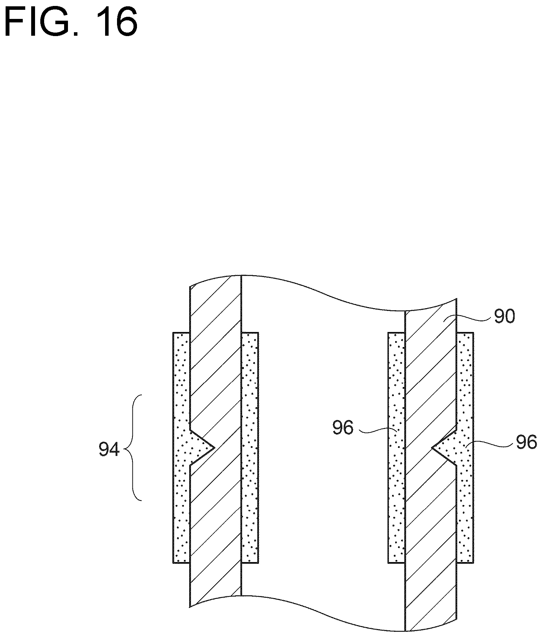

In a case where the wind turbine blade 90 is hollow, the step (S22) of covering the portion to be damaged 94 of the wind turbine blade 90 with the polymeric material 96 may include a step of covering at least one of an outer surface or an inner surface of the portion to be damaged 94 with the polymeric material 96, as depicted in FIG. 16. That is, "at least one of" means that the polymeric material 96 may cover only the outer surface of the portion to be damaged 94 or only the inner surface of the portion to be damaged 94. Alternatively, the polymeric material 96 may cover both the outer surface and the inner surface of the portion to be damaged 94.

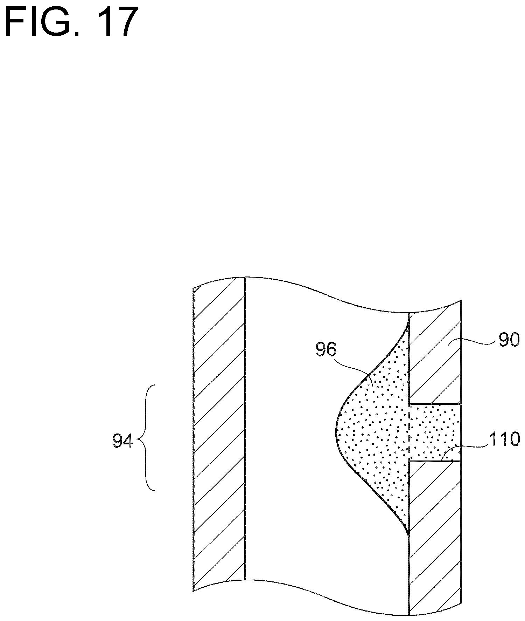

Furthermore, in a case where the wind turbine blade 90 is hollow, the step (S22) of covering the portion to be damaged 94 of the wind turbine blade 90 with the polymeric material 96 may include a step of injecting the polymeric material 96 from outside to inside of the portion to be damaged 94, as depicted in FIG. 17. For instance, a hole 110 for injecting the polymeric material 96 from outside to inside the portion to be damaged 94 may be an existing hole, or a hole provided to inject the polymeric material 96. Furthermore, the polymeric material 96 to be injected from outside to inside of the portion to be damaged 94 of the wind turbine blade 90 is, for instance, an oleaginous substance such as wax and grease.

The step (S23) of damaging the portion to be damaged 94 of the wind turbine blade 90 covered with the polymeric material 96 is a step of cutting the wind turbine blade 90 in two or bending the wind turbine blade 90 at the portion to be damaged 94 covered with the polymeric material 96. In the step (S23) of damaging the portion to be damaged 94 of the wind turbine blade 90 covered with the polymeric material 96, the wind turbine blade 90 may be completely cut in two, or bent at a notch provided on a portion covered with the polymeric material 96.

The step (S23) of damaging the portion to be damaged 94 of the wind turbine blade 90 covered with the polymeric material 96 may include a step of separating a tip end side 112 of the wind turbine blade 90 from a root end side 114 opposite to the tip end side 112 across the portion to be damaged 94. The step of separating the tip end side 112 of the wind turbine blade 90 from the root end side 114 opposite to the tip end side 112 across the portion to be damaged 94 may include cutting the tip end side 112 of the wind turbine blade 90 off from the root end side 114 and letting the tip end side fall.

The method for disassembling the wind turbine 70 depicted in FIG. 11 includes the step (S22) of covering the portion to be damaged 94 of the wind turbine blade 90 with the polymeric material 96, and thus the portion to be damaged 94 of the wind turbine blade 90 is covered with the polymeric material 96, and thus it is possible to suppress scattering of dust generated at the portion 94.

In a case where the step (S21) of identifying the portion to be damaged 94 of the wind turbine blade 90 includes a step of providing a scratch on the portion to be damaged 94 as a starting point, the portion to be damaged of the wind turbine blade 90 has the scratch as a starting point, and thus it is possible to damage the wind turbine blade 90 using the scratch as a starting point.

In a case where the polymeric material 96 is a sheet-shaped polymeric material and the step (S22) of covering the portion to be damaged 94 of the wind turbine blade 90 with the polymeric material 96 includes a step of covering the portion to be damaged 94 with the sheet-shaped polymeric material, the portion to be damaged 94 is covered with the polymeric material having a sheet shape, and thus it is possible to suppress scattering of dust generated at the portion to be damaged 94.

In a case where the wind turbine blade 90 is hollow and the step (S22) of covering the portion to be damaged 94 of the wind turbine blade 90 with the polymeric material 96 includes a step of covering at least one of the outer surface or the inner surface of the portion to be damaged 94 with the polymeric material 96, at least one of the outer surface or the inner surface of the portion to be damaged 94 is covered with the polymeric material 96, and thus it is possible to suppress scattering of dust generated at the portion to be damaged 94.

In a case where the wind turbine blade 90 is hollow and the step (S22) of covering the portion to be damaged 94 of the wind turbine blade 90 with the polymeric material 96 includes a step of injecting the polymeric material 96 from outside to inside of the portion to be damaged 94, the polymeric material 96 is injected from outside to inside the portion to be damaged 94 and the interior of the portion to be damaged 94 is covered with the polymeric material 96, and thus it is possible to suppress scattering of dust generated at the portion to be damaged 94.

In a case where the step (S23) of damaging the portion to be damaged 94 of the wind turbine blade 90 covered with the polymeric material 96 includes a step of separating the tip end side 112 of the wind turbine blade 90 from the root end side 114 opposite to the tip end side 112 across the portion to be damaged 94, the tip end side 112 of the wind turbine blade 90 is separated from the root end side 114 opposite to the tip end side across the portion to be damaged 94, and thereby the wind turbine blade 90 is disassembled.

As described above, the method for disassembling the wind turbine 70 depicted in FIG. 11 is a method for disassembling the wind turbine blade 90. The method for disassembling the tower 80 is similar to the method for disassembling the wind turbine blade 90, and thus the method for disassembling the tower 80 will not be described in detail.

The contents described in the above respective embodiments can be understood as follows, for instance.
[1] A method for disassembling a structure (10) according to an aspect includes: a step (S1) of identifying a portion to be damaged (12) of the structure (10); a step (S2) of covering the portion to be damaged (12) with a polymeric material (14); and a step (S3) of damaging the portion to be damaged (12) covered with the polymeric material (14).
   The method for disassembling a structure (10) according to the present disclosure includes a step (S3) of covering the portion to be damaged (12) of the structure (10) with the polymeric material (14), and thus the portion to be damaged (12) of the structure (10) is covered with the polymeric material (14), whereby it is possible to suppress scattering of dust generated at the portion (12).
[2] In the method for disassembling a structure (10) according to another embodiment, in the above method [1], the step (S1) of identifying the portion to be damaged (12) includes a step of providing a scratch (20) on the portion to be damaged (12) as a starting point.
   Accordingly, the scratch (20) is provided on the portion to be damaged (12) as a starting point, and thereby it is possible to damage the structure (10) using the scratch (20) as a starting point.
[3] In the method for disassembling a structure (10) according to another aspect, in the method according to the above [1] or [2], the polymeric material (14) is a sheet-shaped polymeric material, and the step (S2) of covering with the polymeric material (14) includes a step of covering the portion to be damaged (12) with the sheet-shaped polymeric material.
   Accordingly, the portion to be damaged (12) is covered with a sheet-shaped polymeric material, and thereby it is possible to suppress scattering of dust generated at the portion.
[4] In the method for disassembling a structure according to another aspect, in the method according to any one of the above [1] to [3], the structure (10) is hollow, and the step (S2) of covering with the polymeric material includes a step of covering at least one of an outer surface or an inner surface of the portion to be damaged (12) with the polymeric material (14).
   Accordingly, at least one of the outer surface or the inner surface of the portion to be damaged (12) is covered with the polymeric material (14), and thereby it is possible to suppress scattering of dust generated at the portion (12).
[5] In the method for disassembling a structure (10) according to another embodiment, in the method according to any one the above [1] to [3], the structure (10) is hollow, and the step (S12) of covering with the polymeric material (14) includes injecting the polymeric material (14) from outside to inside of the portion to be damaged (12).
   Accordingly, the polymeric material (14) is injected from outside to inside of the portion to be damaged (12) and the inside of the portion to be damaged (12) is covered with the polymeric material (14), whereby it is possible to suppress scattering of dust generated at the portion (12).
[6] In the method for disassembling a structure (10) according to another embodiment, in the method according to any one of the above [1] to [5], the step (S3) of damaging includes a step of separating a first side (gravity-direction lower side 28) of the portion to be damaged (12) from a second side (gravity-direction upper side 30) opposite to the first side across the portion to be damaged (12).
   Accordingly, the first side (gravity-direction lower side 28) of the portion to be damaged (12) is separated from the second side (gravity-direction upper side 30) opposite to the first side across the portion to be damaged (12), and thereby the structure (10) is disassembled.
[7] In the method for disassembling a structure (10) according to another aspect, in the method according to any one of the above [1] to [6], the portion to be damaged is a portion which has a smaller thickness than another part, and the step (S1) of identifying the portion to be damaged includes a step of detecting the portion.

Accordingly, it is possible to select the portion having a smaller thickness than another part as the portion to be damaged.

### Reference Signs List

- 10: Structure
- 12: Portion to be damaged of the structure
- 14: Polymeric material
- 16: Portion where the structure is cut in two or bent
- 20: Scratch
- 22: Groove
- 24: Hole
- 26: Hole for injecting the polymeric material
- 28: Gravity-direction lower side of the structure
- 30: Gravity-direction upper side of the structure
- 40: Meteorological tower
- 42: Foundation
- 44: Tower
- 46: Steel frame
- 48: Tower body
- 50: Protrusion
- 52: Measurement instrument
- 56: Portion to be damaged
- 58: Polymeric material
- 60: Portion where the tower body is cut in two or bent
- 70: Wind turbine
- 72: Support-structure part
- 74: Generator part
- 76: Rotor part
- 78: Foundation
- 80: Tower
- 82: Driving shaft
- 84: Gearbox
- 86: Generator
- 88: Housing
- 90: Wind turbine blade
- 92: Rotor head
- 94: Portion to be damaged
- 96: Polymeric material
- 98: Portion where the wind turbine blade is cut in two or bent
- 102: Portion which breaks when the wind turbine blade is cut in two or bent
- 104: Scratch
- 106: Groove
- 108: Hole
- 110: Hole for injecting the polymeric material
- 112: Tip end side of the wind turbine blade
- 114: Root end side of the wind turbine blade

## Claims

1. A method for disassembling a structure, comprising:
a step of identifying a portion to be damaged of the structure;
a step of covering the portion to be damaged with a polymeric material; and
a step of damaging the portion to be damaged covered with the polymeric material.

2. The method for disassembling a structure according to claim 1,
wherein the step of identifying the portion to be damaged includes a step of providing a scratch on the portion to be damaged as a starting point.

3. The method for disassembling a structure according to claim 1 or 2,
wherein the polymeric material is a sheet-shaped polymeric material, and
wherein the step of covering with the polymeric material includes a step of covering the portion to be damaged with the sheet-shaped polymeric material.

4. The method for disassembling a structure according to claim 1 or 2,
wherein the structure is hollow, and
wherein the step of covering with the polymeric material includes a step of covering at least one of an outer surface or an inner surface of the portion to be damaged with the polymeric material.

5. The method for disassembling a structure according to claim 1 or 2,
wherein the structure is hollow, and
wherein the step of covering with the polymeric material includes injecting the polymeric material from outside to inside of the portion to be damaged.

6. The method for disassembling a structure according to claim 1,
wherein the step of damaging includes a step of separating a first side of the portion to be damaged from a second side opposite to the first side across the portion to be damaged.

7. The method for disassembling a structure according to claim 1 or 2,
wherein the portion to be damaged is a portion which has a smaller thickness than another part, and
wherein the step of identifying the portion to be damaged includes a step of detecting the portion.
